# EUROPEAN PATENT APPLICATION

(11) **EP 2 022 980 A1**
(43) Date of publication of application: **11.02.2009**
(21) Application number: 07015425.7
(22) Date of filing: 06.08.2007
(51) Int. Cl.: F03D 3/06, F03D 7/06

(54) **Vertical axis wind turbine with wingletted cam-tiltable blades**

(71) Applicant: Seven Stars Worldwide Limited, Tortola British Virgin Islands (TW)
(72) Inventor: Kuo, Wen-Chung, Taipei 104 (TW); Hsiao, Ting-Hao, Taipei 104 (TW); Chao, Yu-Ian, Taipei 104 (TW); Hu, Chia-Nan, Taipei 104 (TW); Griffin, Mark William, Taipei 104 (TW)
(74) Representative: Horak, Michael

(57) **Abstract**

A vertical axis wind turbine with wingletted cam-tiltable blades is provided, including: a generator, a shaft interconnected with the generator, and a plurality of blade sets coupled to the shaft. Cam members are provided inside the shaft and have guide sections of pre-determined shapes. The blade set includes blades that are coupled to crank arms in contact with the guide sections. Thus, when the blades are located in a windward position and a leeward position respectively, the blades are caused by the guide sections to automatically and easily set at an optimum pressure-receiving condition and a least wind-resistance condition respectively, for receiving wind energy from variable directions so that the shaft can be rotated in low wind speed conditions to drive the generator for power generation.

## Description

### BACKGROUND OF THE INVENTION

### 1. Field of the Invention

The present invention relates to a vertical axis wind turbine with wingletted cam-tiltable blades, and in particular to a vertical axis wind turbine that employs a guide means constituted of cams and crank arms, and aerodynamic force, to control the tilting or swiveling of the angle of the blades, such that is the blades are automatically set in a windward position to receive wind energy from variable directions so as to cause the shaft to drive a power generator even in low wind speed conditions and thereby realize optimum power generation performance.

### 2. The Related Arts

Due to the increasing consumption of fossil fuel, reserves of fossil fuel are gradually getting depleted and increasing levels of carbon dioxide are causing a severe "greenhouse" phenomenon in the Earth's atmosphere. Thus, the United Nations has issued regulations and commands and is coordinating the fight against global warming. Recently, many nations around the world have put a lot of effort into developing renewable energies, among which wind energy is one of the best. This is simply because wind power stations do not generate any carbon dioxide emissions and have absolutely no risk of nuclear pollution.

Electrical power is considered "advanced" energy and has an extremely wide range of applications. Electricity is also the foundation of modem civilization, and is a must for modem society.

The known horizontal axis wind power station usually needs a tower as high as 50 meters, which carries a generator and a blade assembly that drives the generator at the top thereof This makes the tower very bulky, costly and difficult to maintain. Thus, the known construction of the horizontal axis wind turbine is apparently not an ideal solution for wind power stations.

Prior references discussing or disclosing windmill or wind turbine power generation include, for example, US Patent Nos. 4,496,283; 384,232; 440,266; 505,736; 685,774; 830,917; 1,076,713; 4,534,703; 4,679,985; 4,818,180; 5,256,034; 4,220,870; 7,118,344; 6,749,399; 963,359; 5,269,647; 6,000,907; 6,537,018; 5,083,902; 6,749,393; 863,715; 4,509,899; 4,421,458; 6,726,439; 5,195,871; and 4,245,958, but are not limited thereto. These known references share at least the following drawbacks:
(1) The construction is complicated and assembly is difficult, both leading to increased costs;
(2) Swiveling or tilting of the blades to face the direction of the incoming airflow is not carried out by aerodynamic force so an additional device for swiveling or tilting the blades is needed, such as a wind vane coupled to the blade by a transmission mechanism; and
(3) The design of the structure is poor because a huge initial driving force is needed to swivel the blades to face the wind direction, such that the blades cannot be properly swiveled in low wind speed conditions, leading to low power generation efficiency.

Other prior references are also known, including US Patent Nos. 3,995,170; 6,688,842; and 6,749,394, none of which discloses effective use of the aerodynamic force, and all of which have the following drawbacks:
(1) All the blades are individually arranged in a vertical state, and are not interconnected to facilitate swiveling thereof (the blades of US Patent No. 3,995,170 are interconnected, but a transmission mechanism is needed for the interconnection), so that the initial driving force for swiveling the blades is huge;
(2) The blades have to be swiveled (by an angle of as much as 180 degrees) to face the wind direction by a huge initial driving force so that the blades cannot be swiveled in low wind speed conditions, leading to poor power generation efficiency; and
(3) The blades are not of a design or construction good enough to facilitate swiveling of the blades with a small initial driving force.

Further prior references, such as US Patent No. 4,383,801, use a large wind vane to facilitate swiveling of blade via a cam. This known device has at least the following drawbacks:
(1) The construction is complicated and assembly is difficult, both leading to an increase of costs; and
(2) The swiveling of the blades is driven by mechanical transmission, so that the initial driving force for swiveling the blades is huge and the blades cannot be swiveled in low wind speed conditions, leading to poor power generation efficiency.

Further references, such as Chinese Patent No. 96120092.8, disclose a blade swiveling system that uses a wind vane to track the wind direction and issue an electronic signal to control a servo motor which swivels the blades, but the blades have to be driven all the way by the servo motor, leading to consumption of electrical power and increased risk of breakdown caused by undesired influences of temperature and/or humidity on the electronic components. In addition, the motor is mounted on a rotary member and a rotary joint has to be established to transmit electrical power, leading to high risk of failure.

Further references, such as Chinese Patent No. 02232245.0, also suffer various drawbacks, such as:
(1) A huge initial driving force is needed for tilting or swiveling the blades to face the direction of the incoming air flows, and tilting or swiveling the blades is generally impossible in low wind speed conditions, such that the efficiency of power generation is quite low.
(2) The design of the blades is poor, including using additional winglets to facilitate the tilting or swiveling of the blades, such that a huge initial driving force is needed for swiveling the blades.

Thus, the known technology/devices are not good enough. The present inventor has devoted time and energy to the development of the wind turbine with experiments and tests. The present invention is therefore aimed at solving and/or alleviating the drawbacks of the known devices by providing a vertical axis wind turbine with wingletted cam-tiltable blades.

### SUMMARY OF THE INVENTION

In accordance with the present invention, a vertical axis wind turbine with wingletted cam-tiltable blades is provided, comprising: a generator, a shaft interconnected with the generator, and a plurality of blade sets coupled to the shaft. Cam members are provided inside the shaft and have guide sections of pre-determined shapes. A blade set includes blades that are coupled to crank arms in contact with the guide sections. Thus, when the blades are located in a windward position and a leeward position respectively, the blades are caused by the guide sections to automatically and easily set in an optimum pressure-receiving condition and a least wind-resistance condition, respectively, for receiving wind energy from variable directions, so that the shaft is rotatable even with low wind speeds to achieve optimum power.

The foregoing object and summary provide only a brief introduction to the present invention. To appreciate fully these and other objects of the present invention as well as the invention itself, all of which will become apparent to those skilled in the art, the following detailed description of the invention and the claims should be read in conjunction with the accompanying drawings. Through the specification and drawings, identical reference numbers refer to identical or similar parts.

Many other advantages and features of the present invention will be manifested to those versed in the art upon making reference to the detailed description and the accompanying sheets of drawings, in which a preferred structural embodiment incorporating the principles of the present invention is shown by way of illustrative example.

### BRIEF DESCRIPTION OF THE DRAWING

The present invention will be apparent to those skilled in the art by reading the following description of preferred embodiments thereof, with reference to the attached drawings, wherein:
Figure 1 is a perspective view of a vertical axis wind turbine constructed in accordance with the present invention;
Figure 2 is an exploded view of a blade set of the vertical axis wind turbine in accordance with the present invention;
Figures 3 and 4 are perspective views illustrating the operation of the vertical axis wind turbine of the present invention;
Figure 5 is a perspective view, partially sectioned, illustrating a cam shaft of the vertical axis wind turbine of the present invention;
Figure 6 is a perspective view, partially sectioned, illustrating a cam driver device of the vertical wind turbine of the present invention;
Figure 7 is a perspective view, illustrating the operation of the vertical axis wind turbine of the present invention;
Figure 8 is a cross-sectional view taken along line A-A of Figure 7;
Figures 9a, 9b, 9c are cross-sectional views taken along line B-B of Figure 7, illustrating the operation of the blades swiveling upward from a horizontal state to a vertical state;
Figures 10a, 10b, 10c are cross-sectional views taken along line C-C of Figure 7, illustrating the operation of the blades swiveling from a vertical state to a horizontal state;
Figure 11 is a perspective view, illustrating the operation of the vertical axis wind turbine of the present invention;
Figure 12 is a perspective view, partially sectioned, illustrating the operation of a shaft of the vertical axis wind turbine of the present invention driving a generator for power generation;
Figures 13 and 14 are perspective views, partially sectioned, illustrating a cam driver device moving the first cam member downwards on the vertical axis wind turbine of the present invention; and
Figure 15 is a cross-sectional view illustrating the adjustment in the angle of the blades by the downward movement of the first cam member.

### DETAILED DESCRIPTION OF THE PREFERRED EMBODIMENTS

The following descriptions are of exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

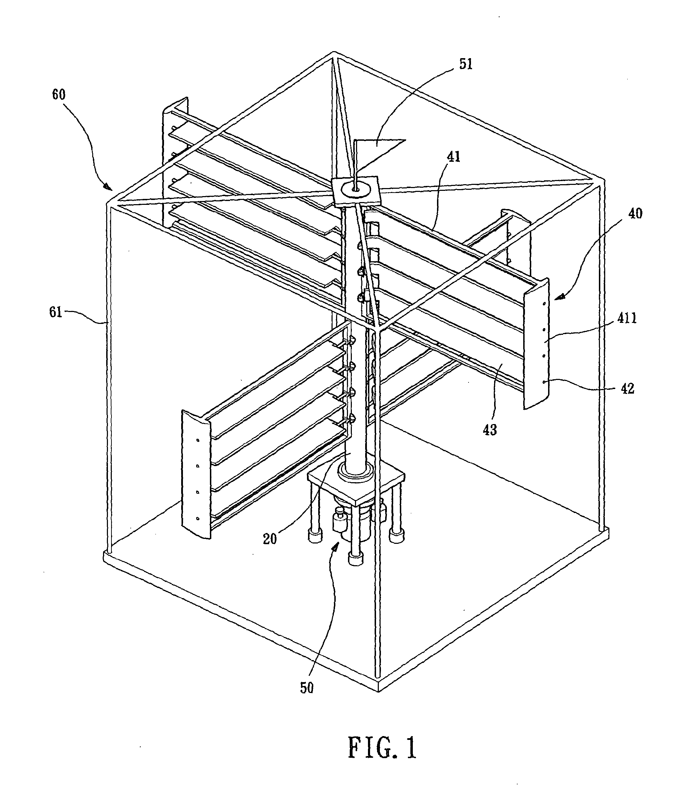

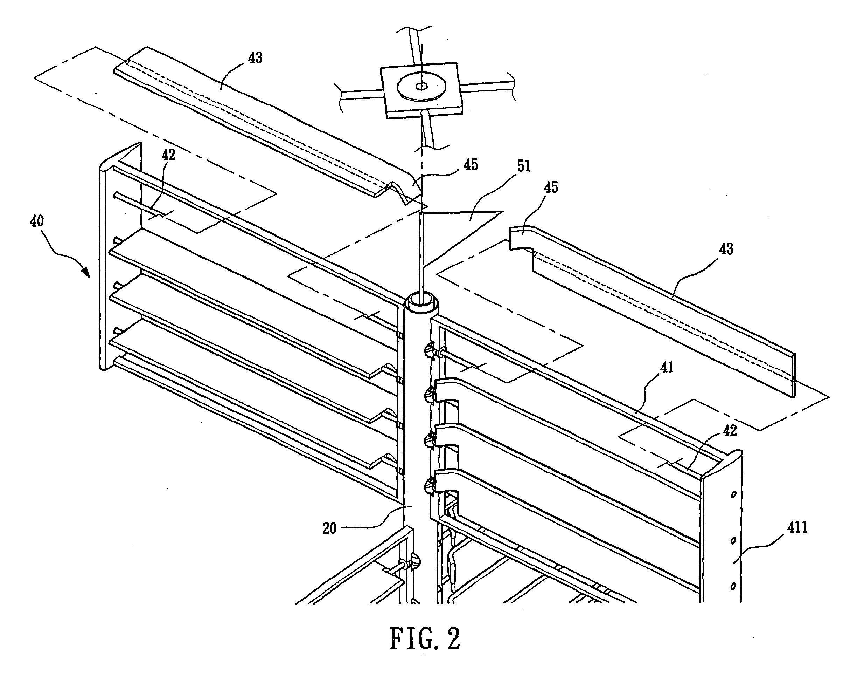

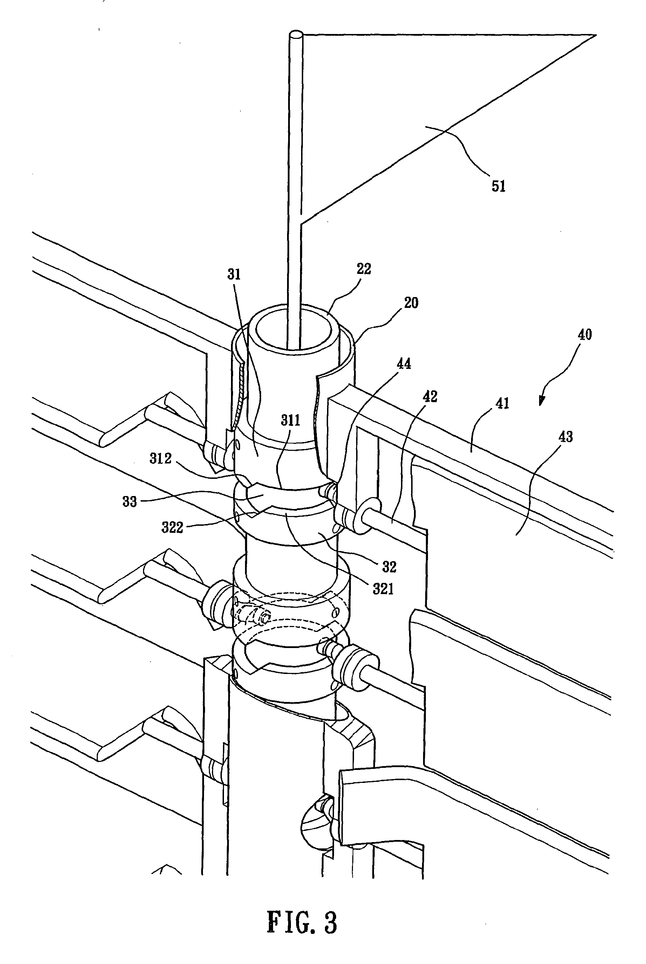

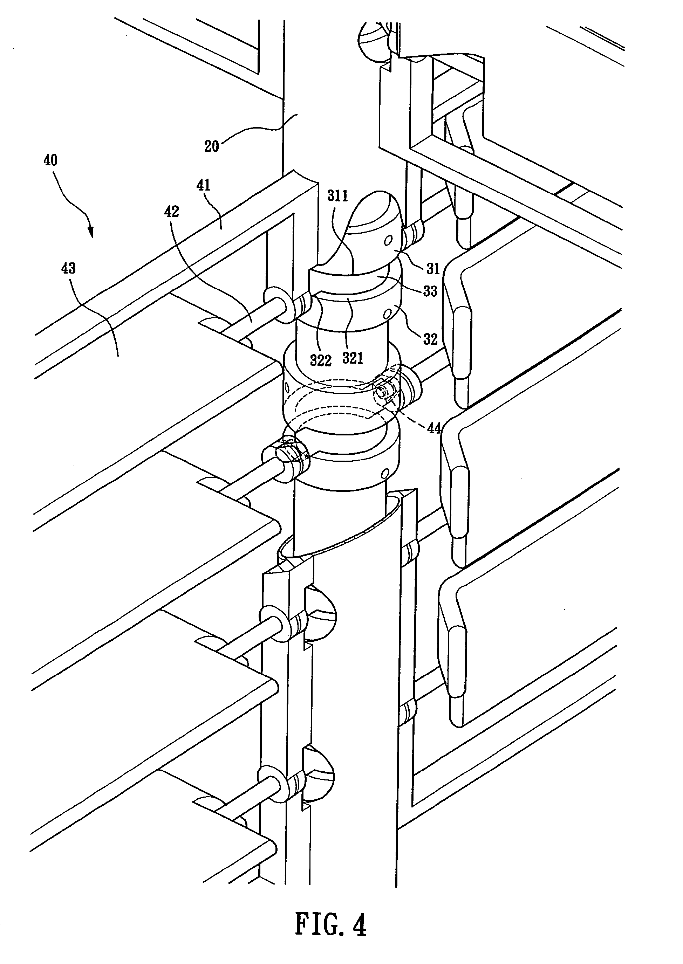

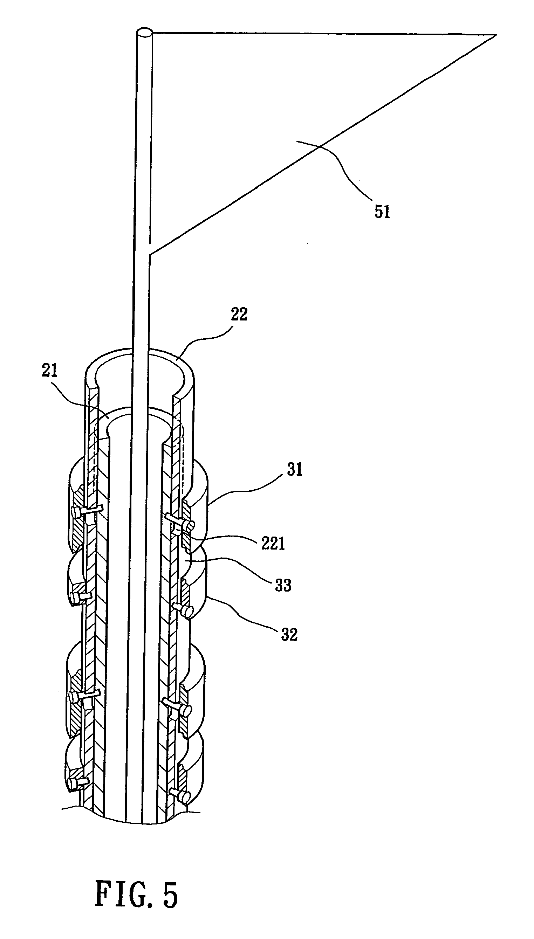

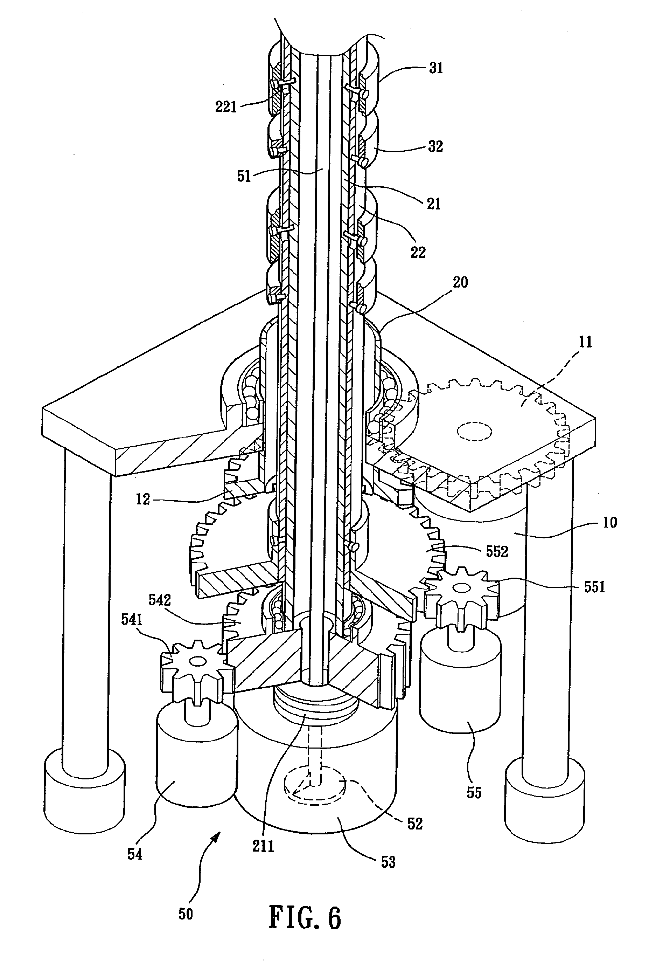

With reference to the drawings and in particular to Figures 1-6, a vertical axis wind turbine constructed in accordance with the present invention comprises a generator 10, a shaft 20, a first cam member 31, a second cam member 32, a plurality of blade sets 40, a cam driver device 50, and a support frame 60. The blade set 40 comprises blades 43 each coupled to a crank arm 44 that is engaged to guide sections 311, 321 of the first and second cam members 31, 32. When the blades 43 are in a windward position and a leeward position respectively, they can be manipulated by the guide sections 311, 321 to automatically and easily set in an optimum pressure-receiving condition and least wind-resistance condition, respectively, for receiving of wind energy from variable directions and thus providing the optimum power generation performance. A detailed description of a preferred embodiment of the present invention will be given as follows.

The generator 10 functions to convert rotary mechanical energy into electrical power.

The shaft 20 is coupled to the generator 10 by gears 11, 12 and rotation of the shaft 20 functions to drive the generator 10 for generation of power. The shaft 20, which is hollow, contains a cam shaft 21 and an outer jacket 22 fitted over the cam shaft 20.

The first cam member 31 and the second cam member 32 are vertically aligned and are fitted over the outer jacket 22. The first cam member 31 and the second cam member 32 are fixed to the cam shaft 21 and the jacket 22 by fasteners. The jacket 22 forms a slot 221 at the location where each fastener extends to allow the cam shaft 21 to move the first cam member 31 downward a pre-determined distance. The first and second cam members 31, 32 have opposing faces between which there is a guide channel 33. The opposing faces also act, respectively, as the guide sections 311, 321, which, at two diametrically opposed points, have inclined sections 312, 322.

The blade sets 40 are arranged in such a way that an upper-level blade set and lower-level blade set, which are stacked together in an alternate manner to serve as a unitary module, are fixed to the shaft 20 and the blade set 40 of each pair comprises portions arranged in an opposite manner on opposite sides of the shaft 20. If desired, a single pair of upper-level and lower-level blade sets can be used, or alternatively, based on the local topography and wind field, one or more additional pairs of blade sets can be further stacked to increase power generation efficiency. The blade set 40 comprises a frame 41 located on each side of the shaft 20 and having a remote, free end forming a winglet 411 to reduce wind resistance. The frame 41 rotatably supports a plurality of blade rods 42 each of which is provided with a blade 43. Each blade rod 42 has a proximal end forming the crank arm 44 that extends into the corresponding guide channel 33 to engage the guide sections 311, 321 in a movable manner. The proximal, inner end of the blade 43 forms a secondary winglet 45 that is set at a pre-determined angle and facilitates the concentration of incoming wind pressure.

The cam driver device 50 comprises a wind vane assembly 51 housed in the shaft 20 with a wind vane projecting upward out of the shaft 20, a wind direction sensor 52 arranged below the wind vane assembly 51, a stand 53 to which a lower-end threaded section 211 of the cam shaft 21 is coupled in a threading engagement manner, a first motor 54 and a second motor 55, of which the first motor 54 drives axial movement of the cam shaft 21 that is provided with the threaded section 211 via gears 541, 542 and the second motor 55 drives, via gears 551, 552, rotation of the jacket 22 and the cam shaft 21 in association with the rotation of the wind vane and change of direction thereof. The second motor 55 is activated by the wind direction sensor 52 when the wind vane assembly 51 is rotated by air flows or winds.

The support frame 60 is composed of a plurality of horizontal and vertical bars 61 that form a multi-level framework to support the shaft 20.

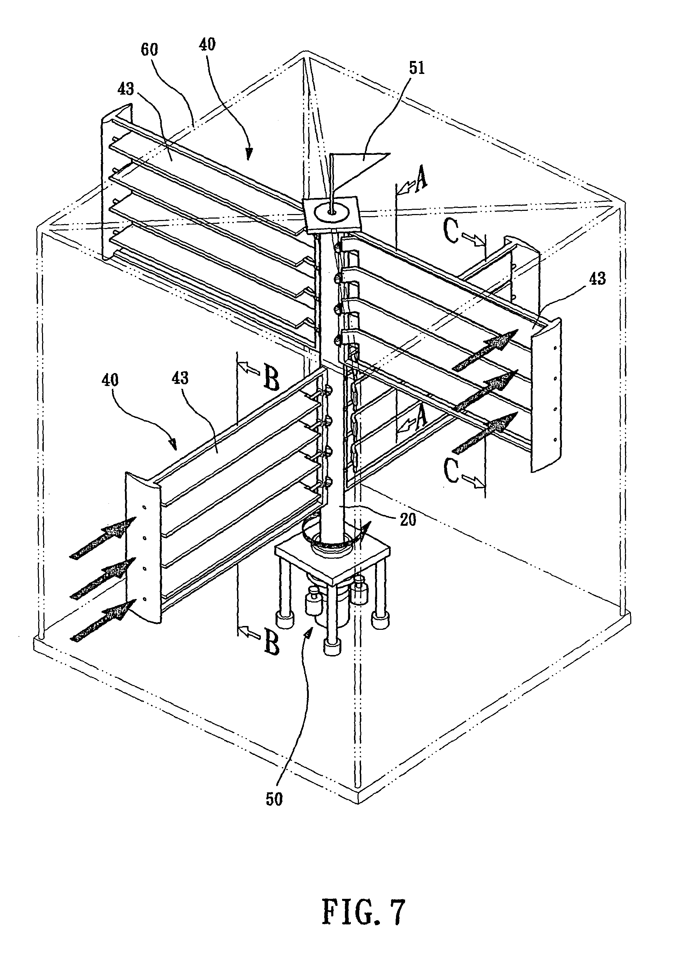

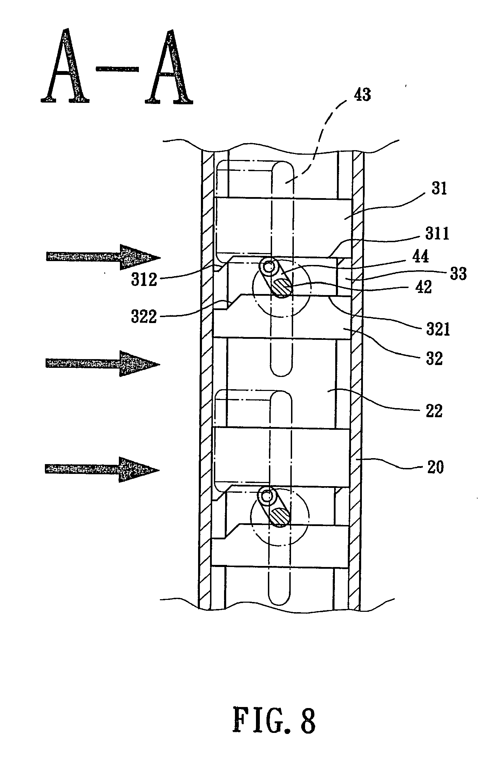

Also referring to Figures 7 and 8, when the wind turbine of the present invention is acted upon by wind, [as indicated by the arrows], the first cam member 31 and the second cam member 32 are set in pre-determined positions in accordance with the direction indicated by the wind vane assembly 51. The blades 43 of one side of the upper-level blade set 40 are guided by the first cam member 31 and the second cam member 32 and caused by aerodynamic force to swivel automatically to a vertical state where the vertical blades 43 receive the greatest wind pressure. Meanwhile the blades 43 on the other side of the upper-level blade set 40 are guided by the first cam member 31 to set an initial swiveling angle and thence, due to the wind pressure acting upon the blades 43, automatically swivel to the horizontal state, which is the state of least wind resistance, so that the blade set 40 drives the shaft 20 to rotate in, for example, a counter-clockwise direction. At the same time, the lower-level blade set 40 is substantially parallel to the air flow of the wind thereby losing wind pressure (and thereby losing power), but the blades 43 on one side of the lower-level blade set 40 are in a horizontal state, getting ready to be acted upon by the aerodynamic force of the wind to start swiveling to a vertical state.

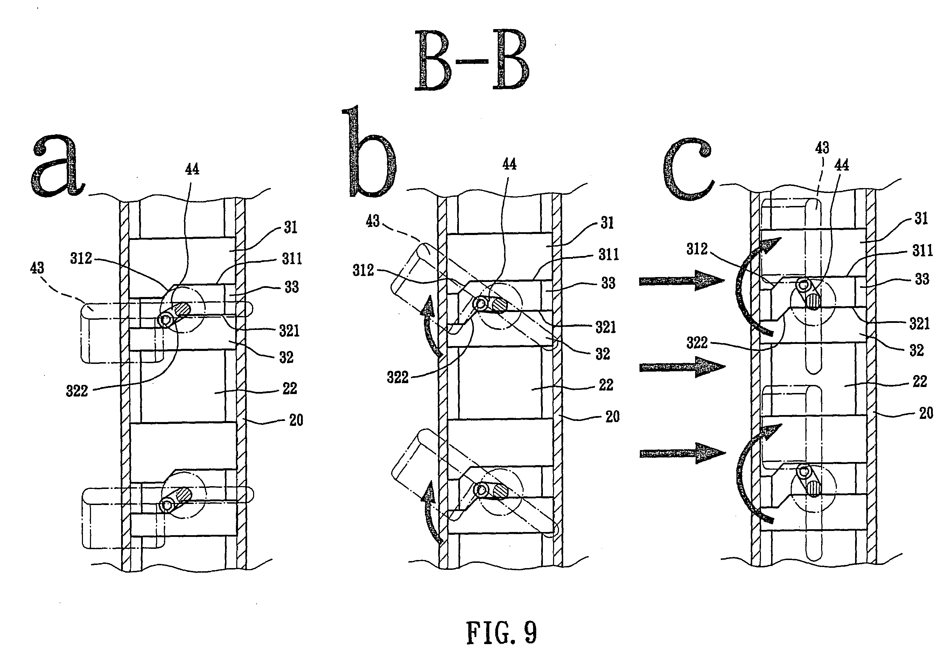

Figure 9 shows the condition succeeding from that shown in Figure 7. With the upper-level and lower-level blade sets 40 further rotating counter-clockwise, the blades 43 of the lower-level blade set 40 that are in a horizontal state ready to receive the aerodynamic force of the wind (the blades 43 of the other side of the lower-level blade set 40 being in a vertical state) cause the crank arms 44 thereof to move along the inclined sections 322 of the second cam members 32 and thus their initial angle is changed by the camming action. After that change of angle, the blades 43 are subject to wind pressure which allows them automatically and easily to swivel upward. When the blades 43 swivel and approach a vertical state, the blades 43 engage with the inclined sections 322 of the guide sections 311 of the first cam members 31 and are thus automatically stopped. At this point, the blades 43 together form a vertical surface that serves as an optimum wind-receiving surface that effectively receives wind pressure for driving rotation of the shaft 20.

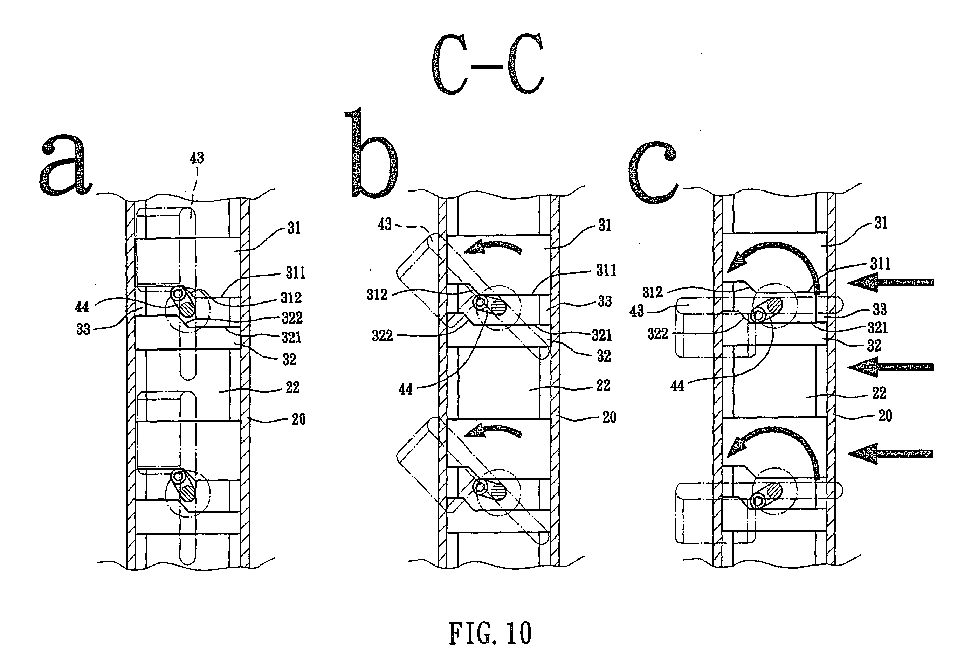

Figure 10 also demonstrates the condition succeeding Figure 7. When the blades 43 on one side of the lower-level blade set 40 start to receive wind pressure and swivel to form a vertical surface, the blades 43 on the other side of the lower-level blade set 40, that were originally in a vertical state, start to get to a leeward position. The crank arms 44 thereof reach the inclined sections 312 of the guide sections 311 of the first cam members 31 and are induced thereby to change their angle so that the blade 43 that was in a vertical state easily swivels to a horizontal state, a less wind-resistant condition.

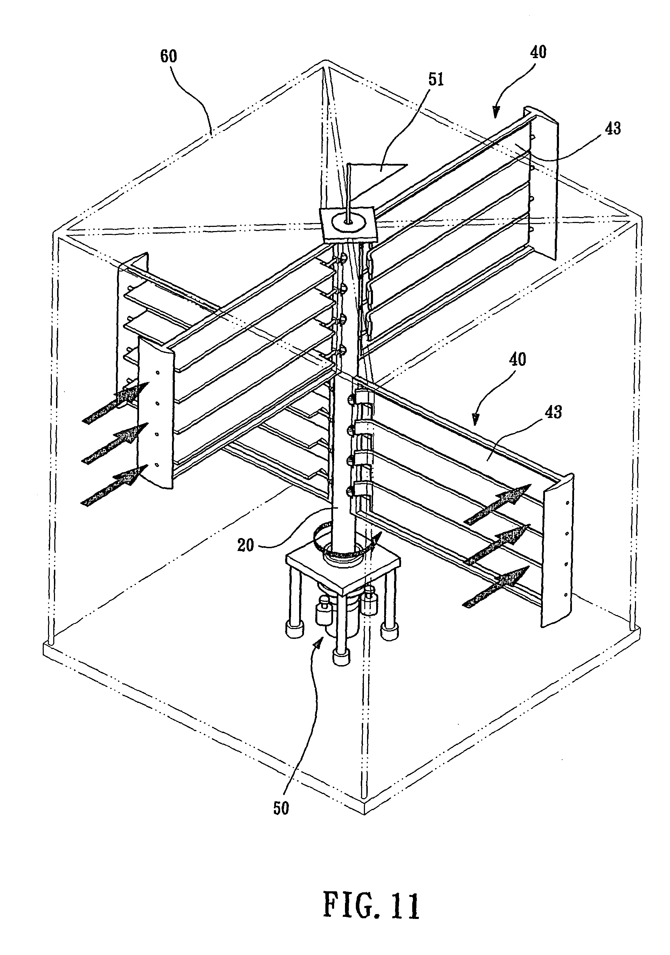

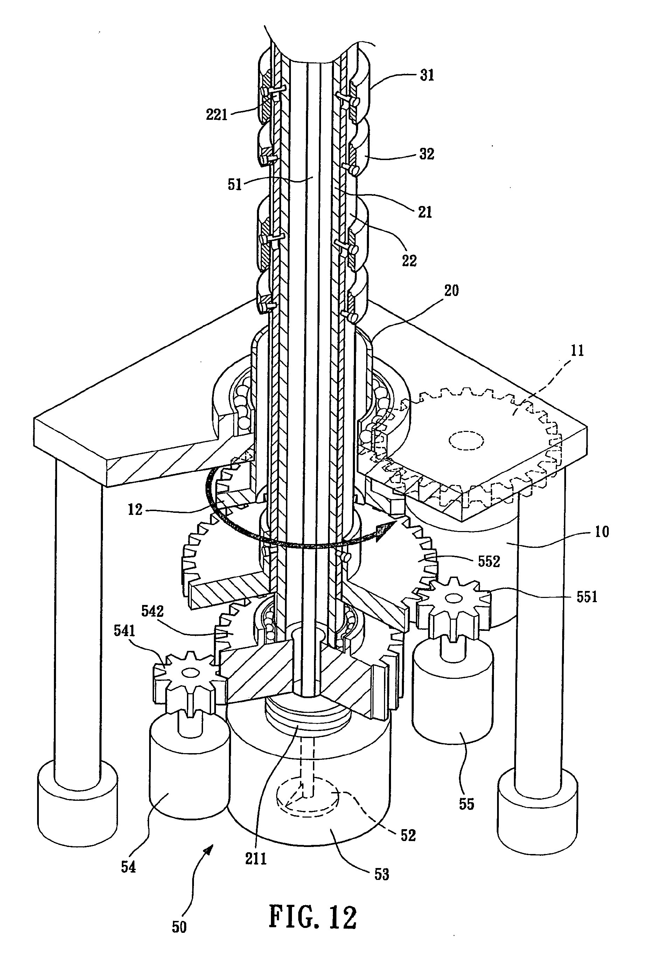

Referring to Figures 11 and 12, when the blades 43 of one side of the lower-level blade set 40 are in a vertical state and are subject to the greatest wind pressure, the blades 43 of the other side of the lower-level blade set 40 are located in a leeward position and provide the least wind resistance. At this moment, the upper-level blade set 40 is substantially parallel to the direction of air flow of the wind, thus losing wind pressure (and thereby losing power), and the lower-level blade set 40 succeeds the rotation force of the upper-level blade set 40. As such, wind energy of variable directions can be intersected and optimum power generation performance can be ensured for rotating the shaft 20 to drive the generator 10 even at low wind speeds.

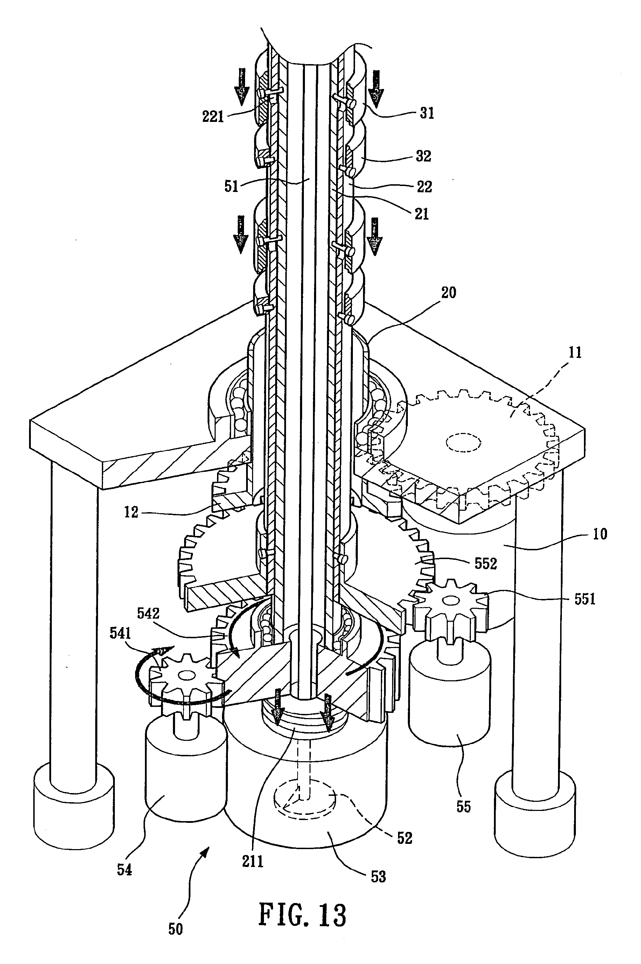

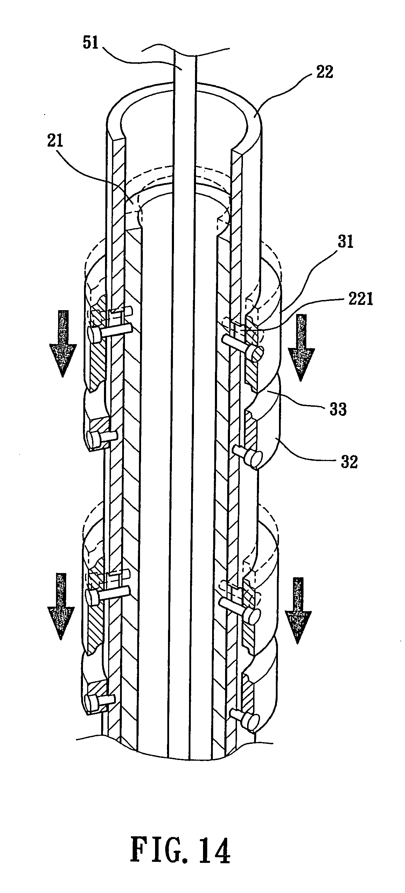

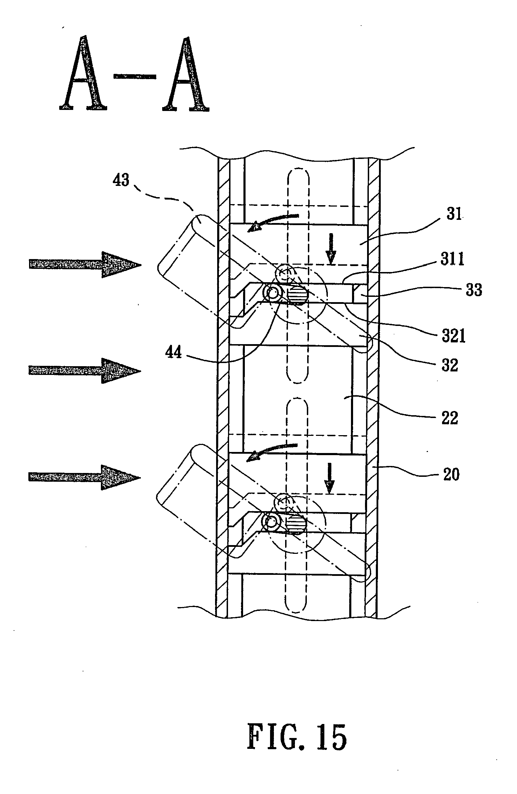

Referring to Figures 13, 14, and 15, the cam shaft 21 is rotated by the first motor 54 of the cam driver device 50 in order to move the threaded section 211 within the stand 53 in a vertical direction downwards and thus causing a pre-determined distance of travel of the first cam member in a vertical direction downwards for reducing the width of the guide channel 33. This reduces the range of motion of the blades 43. In case of high wind speeds, the range of motion of the blades 43 can be adjusted to regulate wind pressure in order to prevent damage caused by excessive wind speeds.

Although the present invention has been described with reference to the preferred embodiments thereof, it is apparent to those skilled in the art that a variety of modifications and changes may be made without departing from the scope of the present invention which is intended to be defined by the appended claims.

## Claims

1. A vertical axis wind turbine, comprising:
a generator; and
a shaft mounted to the generator; and
at least one blade set mounted to the shaft;
wherein a cam shaft is arranged inside the shaft, the cam shaft carrying cam means having guide means of pre-determined shapes, the blade set comprising at least one blade rod that is rotatably connected to the shaft and carries blades arranged on opposite sides of the shaft, the blade rod having a crank arm that is in contact with the guide means, whereby when the blades thereof are located in a windward position and leeward position respectively, the blades are guided by the guide means to automatically and easily set in an optimum pressure-receiving position and a least wind-resistance position, respectively, for receiving wind energy from variable directions so that the shaft is rotatable even at low wind speeds to derive optimum power generation performance.

2. The vertical axis wind turbine as claimed in Claim 1, wherein the cam means comprises a first cam member and a second cam member, with a guide channel between for housing the crank arm.

3. The vertical axis wind turbine as claimed in Claim 2, wherein a jacket is fitted between the cam shaft and the cam means, and wherein the first cam member and the second cam member are respectively fixed to the cam shaft and the jacket by fasteners, the jacket forming a slot through which the fastener fixed to the cam shaft extends so that movement of the cam shaft in a vertical direction causes the first cam member to move in unison therewith.

4. The vertical axis wind turbine as claimed in Claim **1,** wherein the cam means has inclined sections.

5. The vertical axis wind turbine as claimed in Claim 1, wherein the blade is provided, at a pre-determined location thereon, with a winglet that is set at a pre-determined angle.

6. The vertical axis wind turbine as claimed in Claim 1, wherein the blade set comprises a frame having an edge on which a winglet is formed.

7. The vertical axis wind turbine as claimed in Claim 3, wherein the cam shaft is driven by a cam driver device, which comprises a cam shaft forming a threaded section, a stand in threading engagement with the threaded section, and a first motor coupled to the cam shaft.

8. The vertical axis wind turbine as claimed in Claim 1, wherein the cam shaft is driven by a cam driver device that comprises a wind vane assembly housed inside the shaft and having a wind vane projecting out of the top of the shaft, a wind direction sensor coupled to the wind vane assembly, and a second motor coupled to the cam shaft and activated by the wind direction sensor.

9. The vertical axis wind turbine as claimed in Claim 1, further comprising a support rack serving to rotatably support the shaft, the support rack being composed of a plurality of bars that form a framework.
